# FASCICULE DE BREVET EUROPEEN

(11) **EP 2 741 516 B1**
(45) Date de publication et mention de la délivrance du brevet: **09.01.2019**
(21) Numéro de dépôt: 13196344.9
(22) Date de dépôt: 10.12.2013
(51) Int. Cl.: H04N 21/47, H04N 21/80, H04N 21/472, H04N 21/4788, G06Q 50/00

(54) **Extraction d'une séquence d'images dans un signal vidéo**
Bildersequenz Erfassung in einem Videosignal
Image sequence capture in a video signal

(30) Priorité: 10.12.2012 FR 1261842
(43) Date de publication de la demande: 11.06.2014
(73) Titulaire: NC Numericable, 77420 Champs-sur-Marne (FR)
(72) Inventeur: Le May, Philippe, 77437 MARNE LA VALLE CEDEX 2 (FR); Monnier, Stéphane, 77437 MARNE LA VALLE CEDEX 2 (FR); Defrance, Frédéric, 77437 MARNE LA VALLE CEDEX 2 (FR); Huart de Verneuil, Antoine-Hubert, 77437 MARNE LA VALLE CEDEX 2 (FR); Jolly, Thierry, 77437 MARNE LA VALLE CEDEX 2 (FR)
(74) Mandataire: Loyer & Abello

(56) Documents cités:
- US-A1- 2008 285 940
- US-A1- 2009 049 118
- US-A1- 2012 096 357
- US-A1- 2012 110 640

## Description

L'invention se rapporte au domaine du traitement d'un signal vidéo, notamment d'un signal émis par une chaine de télévision, et à un dispositif de traitement d'un tel signal, notamment à un boîtier d'accès à un réseau de télévision numérique.

Les chaînes de télévision numériques peuvent être transmises aux récepteurs finaux à travers divers média, tels que diffusion hertzienne, réseaux câblés ou filaires et réseaux cellulaires. La réception d'un signal de télévision numérique, notamment lorsque ce signal est transporté sur un réseau de paquets, nécessite un certain nombre de traitements tels que démultiplexage, décodage et mise en mémoire tampon qui sont couramment effectués dans un module de traitement pouvant être intégré au poste de télévision ou fourni sous la forme d'un boîtier séparé, qui sera dénommé ici boîtier d'accès. Etant donné qu'un tel boîtier d'accès peut intégrer différentes fonctions, d'autres dénominations sont aussi couramment utilisées telles que décodeur, modem ou set top box.

Les documents US 2012/096357 A1 et US 2009/049118 A1 divulguent des procédés de partage d'une section d'une vidéo en cours de visionnage.

Selon un mode de réalisation, l'invention fournit un procédé de traitement d'un signal vidéo défini par la revendication 1.

Selon d'autres modes de réalisation, un tel procédé peut présenter une ou plusieurs des caractéristiques suivantes.

La section de signal vidéo sélectionnée peut comporter une ou plusieurs images, avec ou sans piste audio associée. Selon un mode de réalisation, la section de signal vidéo sélectionnée est constituée d'une image affichée sur l'afficheur au moment de l'activation de l'élément déclencheur de capture d'image. Selon un mode de réalisation, la section de signal vidéo sélectionnée comporte une séquence d'images débutant à une image affichée sur l'afficheur au moment de l'activation de l'élément déclencheur de capture d'image. Selon un mode de réalisation, une séquence audio associée à la séquence d'images est également sélectionnée en réponse à l'activation de l'élément déclencheur de capture d'image et mise à disposition dans une mémoire. Selon un mode de réalisation, la séquence d'images finit à une image affichée sur l'afficheur au moment d'une deuxième activation de l'élément déclencheur de capture d'image. Selon un mode de réalisation, la séquence d'images finit à une image affichée sur l'afficheur au moment d'une activation d'un deuxième élément déclencheur de capture d'image.

Selon des modes de réalisation, la mémoire dans laquelle la section de signal vidéo sélectionnée est mise à disposition est un module de mémoire vive dédié à cette mise à disposition ou un module de mémoire vive partagé avec d'autres fonctionnalités, notamment une mémoire tampon vidéo.

Selon un mode de réalisation, la section de signal vidéo sélectionnée est mise à disposition dans la mémoire dans un format d'image brute. Une image brute (raw en anglais), aussi appelée négatif numérique, désigne une famille de formats d'images caractérisée par la fidélité au signal directement produit par la source de l'image, par opposition aux images codées dans des formats fortement compressés avec perte d'information, tels que TIFF ou JPEG ou MPEG.

Selon un mode de réalisation, le procédé comporte en outre les étapes de : convertir la section de signal vidéo depuis le format d'image brute dans un format d'image compressé,
mettre à disposition la section de signal vidéo dans le format d'image compressé dans une mémoire.

Selon des modes de réalisation, le signal vidéo peut être obtenu à partir de différentes sources, par exemple à partir d'une interface réseau recevant un flux diffusé en streaming tel qu'une chaîne de télévision, ou à partir d'un dispositif de stockage de données tel qu'un lecteur de disque optique, un disque dur ou un module de mémoire flash.

Selon un mode de réalisation, le procédé comporte en outre :
recevoir un flux vidéo encodé selon un format compressé,
décoder le flux vidéo pour générer le signal vidéo en cours de lecture.

Selon un mode de réalisation, les éléments graphiques de contrôle comprennent en outre un élément déclencheur de partage d'image activable par l'utilisateur pour déclencher les étapes de :
générer un projet de message contenant la section du signal vidéo sélectionnée, et éventuellement d'autres éléments, par exemple une zone de texte, et
envoyer le message à destination d'un service de partage, par exemple en réponse à un signal de validation du projet de message.

Tel qu'employé ici, un service de partage désigne une application capable de publier ou communiquer le message à destination d'un ou plusieurs destinataires, de manière privée ou publique. Des services de partage utilisables dans des modes de réalisations sont notamment le courrier électronique, le service de messagerie multimédia MMS, les réseaux sociaux en ligne tels que Twitter® ou Facebook® ou autres.

Selon un mode de réalisation, le procédé comporte en outre l'étape d'employer une clé de sécurité associée à un compte personnel sécurisé du service de partage, pour partager le message sous une identité déterminée associée au compte personnel sécurisé. Selon un mode de réalisation, la clé de sécurité comporte un jeton d'authentification généré conformément à un protocole d'autorisation ouvert OAuth. Par protocole d'autorisation ouvert OAuth, on désigne ici les protocoles définis par le groupe de travail OAuth de l'Internet Engineering Task Force, notamment dans les Request for Comment 5849, 6749 et 6750, et les évolutions de tels protocoles. Ces protocoles sont utilisés, dans certains modes de réalisation, pour diffuser le message sur un réseau social sous l'identité d'un membre du réseau social.

Selon un mode de réalisation, l'invention fournit un dispositif de traitement pour signal vidéo défini par la revendication 13.

Selon d'autres modes de réalisation, un tel dispositif peut présenter une ou plusieurs des caractéristiques suivantes.

Selon des modes de réalisation, la mise à disposition de la section de signal vidéo sélectionnée peut être effectuée par étiquetage ou marquage de la section de signal vidéo, notamment en sauvegardant des adresses de début et/ou de fin de la section, ou par copie de la section de signal vidéo, éventuellement avec conversion de format de la section de signal vidéo.

Selon un mode de réalisation correspondant, le dispositif comporte en outre un module de mémoire de capture et un module de copie mémoire apte à copier la section de signal vidéo sélectionnée depuis la mémoire tampon vidéo vers le module de mémoire de capture en réponse à l'activation de l'élément déclencheur de capture d'image.

Selon un mode de réalisation, le dispositif comporte en outre :
une interface d'entrée apte à recevoir un flux vidéo encodé selon un format compressé, et un module de décodage vidéo apte à décoder le flux vidéo pour générer le signal vidéo en cours de lecture.

Selon un mode de réalisation, les éléments graphiques de contrôle comprennent en outre un élément déclencheur de partage d'image activable par l'utilisateur, et
un module générateur de message apte à générer un projet de message contenant la section du signal vidéo et une zone de texte en réponse à une activation de l'élément déclencheur de partage d'image et,
à envoyer le message à destination d'un service de partage en réponse à un signal de validation.

Selon un mode de réalisation, le dispositif comporte en outre un module de stockage de profil apte à stocker des données personnelles associées à un compte personnel sécurisé du service de partage, le module générateur de message étant apte à initier une communication avec le service de partage en employant les données personnelles de manière à partager le message sous une identité déterminée associée au compte personnel sécurisé.

Une idée à la base de l'invention est de fournir une fonction de capture d'image contrôlable au moyen d'une interface graphique, pour permettre à un utilisateur en train de visualiser un contenu vidéo sur un afficheur de sélectionner facilement une section qu'il souhaite extraire de ce contenu à des fins de partage et/ou de stockage. Une autre idée à la base de l'invention est de réaliser cette fonction sans surcharger le contenu capturé avec les éléments graphiques de contrôle.

Certains aspects de l'invention partent de l'idée de proposer une fonction de partage de contenus extraits d'un signal vidéo qui soit facilement utilisable. Certains aspects de l'invention partent de l'idée de proposer une telle fonction au moyen de l'interface graphique d'un boîtier d'accès à un réseau de télévision numérique, un tel boîtier pouvant offrir par ailleurs de nombreuses autres fonctionnalités de manière intégrée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
- La figure 1 est une représentation schématique fonctionnelle d'un téléviseur et d'un boîtier d'accès à un réseau de télévision numérique.
- La figure 2 est une représentation schématique fonctionnelle d'un module de réception et de traitement de signal vidéo pouvant être intégré au boîtier d'accès de la figure 1.
- La figure 3 est un diagramme d'étape représentant un procédé de capture et de partage de contenu pouvant être mis en oeuvre avec le module de réception et de traitement de la figure 2.
- Les figures 4 et 5 sont des représentations schématiques d'un écran comportant des interfaces graphiques utilisables pour contrôler le procédé de la figure 3.

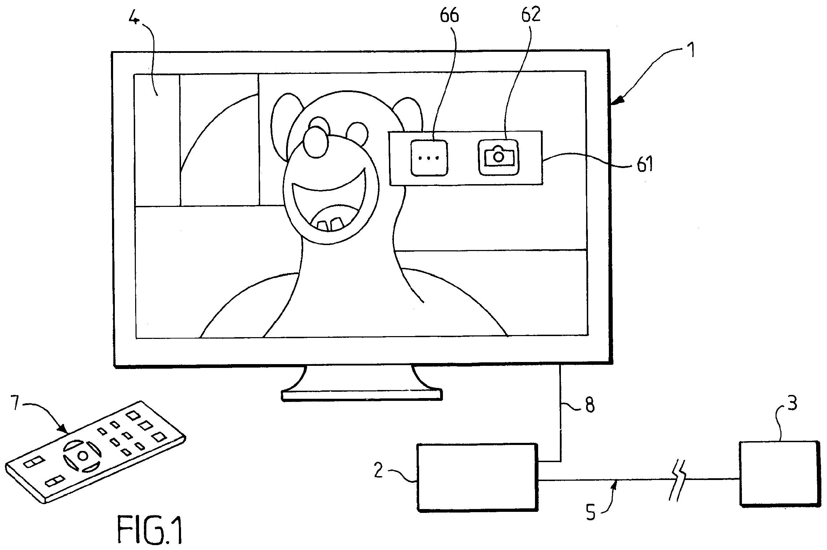

En référence à la figure 1, un téléviseur 1 est relié à un serveur distant de distribution de télévision numérique 3 par l'intermédiaire d'un boîtier d'accès 2 et d'un réseau d'accès 5. Le boîtier d'accès 2 est par exemple placé à proximité du téléviseur 1 voire mécaniquement intégré avec celui-ci. Le réseau d'accès 5 peut être un réseau radio, filaire à haut débit, par exemple un réseau de cuivre, câbles coaxiaux ou de fibres optiques. Le téléviseur 1 comporte un écran 4, par exemple un écran de grande taille et haute résolution. L'image particulière représentée sur l'écran de la figure 1 sera commentée plus bas.

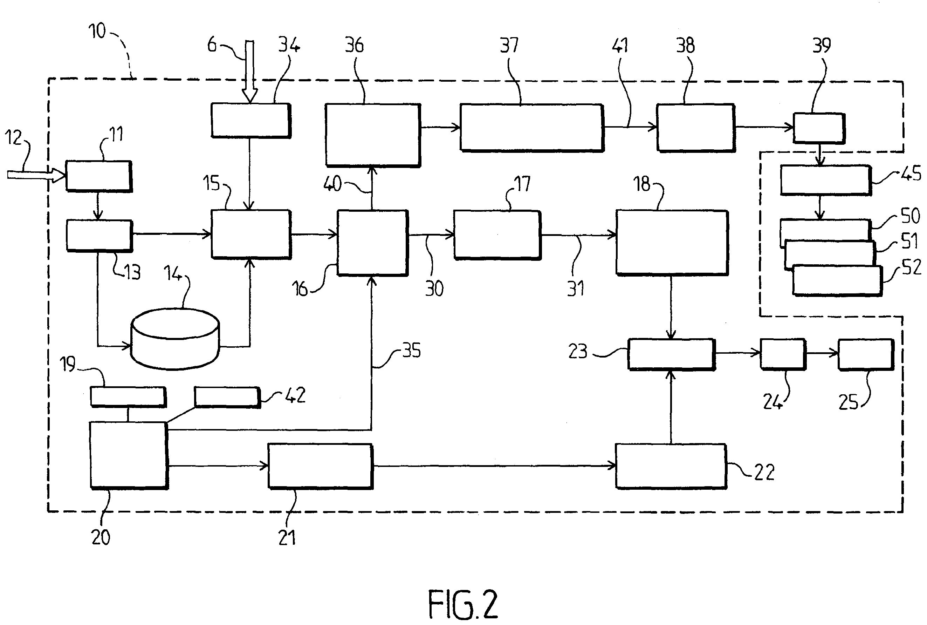

Une fonction du boîtier d'accès 2 est de permettre la réception de signaux de télévision depuis le serveur de distribution de télévision numérique 3. Pour cela, le boîtier d'accès 2 comporte un module de réception et de traitement de signal vidéo 10 qui va maintenant être décrit en référence à la figure 2. Le boîtier d'accès 2 peut aussi comporter d'autres modules fonctionnels pour offrir des fonctionnalités plus riches.

Sur la figure 2, le module de réception et de traitement de signal vidéo 10 comporte une interface d'entrée 11 pour recevoir un flux de transport 12, par exemple à travers une fibre optique d'un réseau optique passif. Le flux de transport 12 porte typiquement les signaux de plusieurs chaînes de télévision multiplexés, par exemple selon un format DVB-C ou non multiplexés par exemple en format HLS. Un module démultiplexeur 13 permet d'extraire le signal et de séparer ces signaux en vue de leur stockage par une mémoire de masse 14 et/ou de leur décodage par un module décodeur 15.

Selon un mode de réalisation, les signaux de télévision sont encodés selon un format compressé MPEG 2, MPEG 4 ou tout autre format comportant une piste vidéo et une ou plusieurs pistes audio, et éventuellement des pistes de sous-titres. Pour cela, le module décodeur 15 est réalisé sous la forme d'un décodeur audio et vidéo. Dans la suite, le traitement des signaux vidéo sera décrit plus en détails.

La mémoire de masse 14 permet de fournir des fonctions de magnétoscope numérique telles que l'enregistrement d'un ou plusieurs programmes autres que celui affiché à l'écran et l'enregistrement du programme affiché à l'écran pour permettre des actions de navigation au sein de celui-ci, par exemple le retour en arrière, la lecture à différentes vitesses en avant ou en arrière, la pause, le saut vers un point donné, etc. Dans un mode de réalisation, la mémoire de masse 14 est un disque dur de grande capacité, par exemple quelques centaines de Giga-octets.

Le fonctionnement du démultiplexeur 13, de la mémoire de masse 14 et du module décodeur 15 sont pilotés par une unité de commande 20 en fonction des instructions données par un utilisateur au moyen d'une télécommande et d'une interface graphique. Pour cela, l'unité de commande 20 est reliée à une interface de télécommande 19 permettant de recevoir des signaux depuis une télécommande 7, par exemple des signaux radio ou infrarouges.

Plus précisément, l'unité de commande 20 est capable de générer une interface graphique comportant des éléments graphiques affichables sur l'écran 4. Ces éléments graphiques sont sélectionnables et activables au moyen de la télécommande 7 pour contrôler les différentes fonctions du module de réception et de traitement de signal vidéo 10, à savoir la sélection de chaîne, la configuration de l'affichage, la navigation dans un programme enregistré et similaires. L'unité de commande 20, l'interface graphique générée par elle et la télécommande 7 permettent également de contrôler et d'utiliser des fonctions de capture d'image et de partage d'image qui seront décrites plus bas.

Un module de mémoire tampon d'interface graphique 21 sert à stocker les éléments graphiques générés par l'unité de commande 20 dans un langage de haut niveau, par exemple en HTML. Un module générateur de plan graphique 22 convertit les éléments graphiques dans un format d'image et les fournit à un mélangeur d'image 23.

Parallèlement, un module de mémoire tampon vidéo 16 est prévu pour stocker temporairement le flux vidéo décodé par le module décodeur 15 dans un format d'image brute. Le module de mémoire tampon vidéo 16 fonctionne comme une file d'attente qui stocke le flux vidéo décodé pendant une brève période, par exemple 1 à 5 secondes.

Le flux vidéo en cours de lecture 30 passe ensuite dans un module de retraitement 17 qui adapte la résolution des images en fonction d'un état de configuration choisi, correspondant notamment aux propriété de l'écran 4 et de la liaison 8 entre le téléviseur 1 et le boîtier 2, par exemple liaison analogique péritel ou liaison numérique HDMI ou autre. Le flux vidéo retraité 31 est transmis à un module de mémoire graphique 18 pour être mis à disposition du mélangeur d'image 23.

Le mélangeur d'image 23 génère l'image à afficher sur l'écran 4 en combinant les éléments graphiques de l'interface graphique fournis par le générateur de plan graphique 22 et le ou les flux vidéo fournis par le module de mémoire graphique 18. Selon des modes de réalisation, cette combinaison peut prendre la forme d'une superposition de fenêtres où les éléments graphiques de commande sont au-dessus de l'image vidéo ou d'une juxtaposition de fenêtres ou encore d'autres formes selon la technique connue des interfaces graphiques. Le mélangeur d'image 23 alimente ainsi une mémoire de couche d'affichage graphique 24 qui stocke l'image et la rend disponible sur une interface physique 25 servant à relier le téléviseur 1, par exemple une interface HDMI.

On va maintenant décrire une fonction de capture d'image qui est mise en oeuvre par le module de réception et de traitement de signal vidéo 10.

En réponse à la réception d'une instruction de capture d'image, l'unité de commande 20 transmet un signal de capture 35 qui provoque une copie immédiate du contenu du module de mémoire tampon vidéo 16 dans un module de mémoire de capture 36, de manière à conserver une copie de l'image 40 qui était affichée à l'écran au moment de l'émission de l'instruction de capture d'image. L'image 40 reste dans le format d'image brute dans le module de mémoire de capture 36, alors qu'elle est rapidement effacée du module de mémoire tampon vidéo 16 si la lecture du programme en cours se poursuit. Ainsi l'image 40 est disponible pour être utilisée dans des applications de partage ou de communication.

Différentes possibilités existent pour permettre à l'utilisateur d'émettre l'instruction de capture d'image. Selon un mode de réalisation préféré, l'interface graphique comporte une icône pouvant être activée à l'aide de la télécommande 7 pour générer l'instruction de capture d'image. En variante, un bouton dédié à cette fonction peut être prévu sur la télécommande 7 sans passer par l'interface graphique. L'instruction de capture d'image peut par exemple être réalisée par un appui prolongé sur le bouton dédié de la télécommande. L'instruction de capture d'image peut être dépendente d'une durée d'appui sur le bouton dédié de la télécommande, par exemple de l'ordre d'une seconde. Dans tous les cas, l'objectif est de capturer l'image ou une des images qui est affichée à l'écran au moment où l'utilisateur déclenche l'émission de l'instruction de capture d'image. Pour cela, un temps de réponse relativement court de la chaîne de commande est nécessaire, par exemple inférieur à 100 ms.

Un module de conversion 37 permet de convertir l'image capturée depuis le format d'image brute vers un format compressé tel que JPEG ou TIFF et avec un niveau de qualité et de résolution ajustable selon les exigences de l'application visée. Le module de conversion 37 stocke l'image 41 codée au format compressé dans un module de mémoire de partage 38 pour mettre l'image 41 à la disposition d'une ou plusieurs applications de partage.

On va maintenant décrire une fonction de partage d'image qui est mise en oeuvre par le module de réception et de traitement de signal vidéo 10.

En réponse à la réception d'une instruction de partage d'image, l'unité de commande 20 génère un projet de message contenant l'image capturée 41 dans le corps du message. Une interface réseau 39 du module de réception et de traitement de signal vidéo 10 permet finalement de transmettre le message contenant l'image capturée 41 à destination d'un ou plusieurs services de partage extérieurs au boîtier d'accès 2.

Selon un mode de réalisation, l'unité de commande 20 est par ailleurs reliée à un module de configuration de messagerie 42 contenant des données d'identification permettant d'accéder à des comptes personnels d'utilisateur sur un ou plusieurs serveurs de partage 50, 51 et 52 extérieurs au boîtier d'accès 2. L'unité de commande 20 utilise les données d'identification pour transmettre le message à un serveur de partage afin que le message soit publié ou diffusé sous l'identité correspondant au compte personnel d'utilisateur. Des données d'identification utilisables dans ce but sont par exemple des identifiants d'abonné auprès d'un fournisseur d'accès à l'Internet, des identifiant d'abonné auprès d'un opérateur de téléphonie mobile (par exemple carte SIM) ou des identifiants d'abonné auprès d'un réseau social, notamment nom d'utilisateur et mot de passe ou jeton d'authentification généré selon un protocole d'autorisation ouvert OAuth.

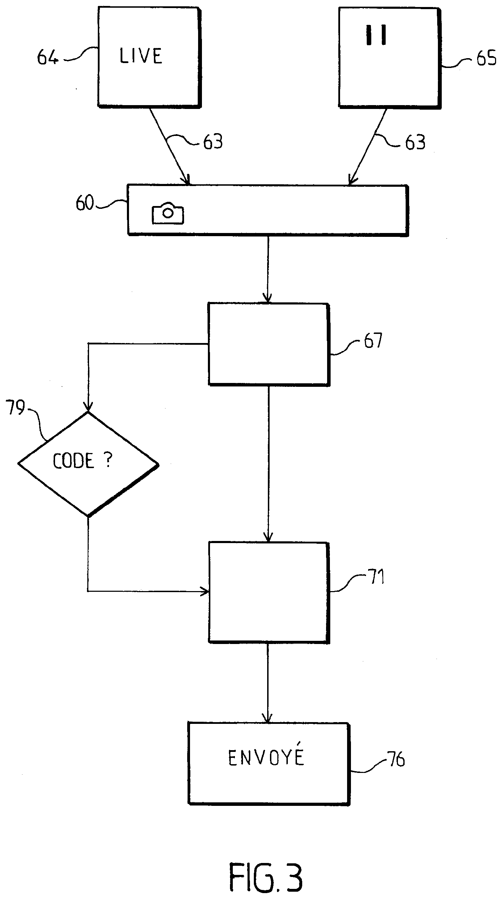

En référence à la figure 3, on va maintenant décrire un procédé de contrôle des fonctions de capture et de partage d'image susmentionnées à l'aide d'une interface graphique affichable sur un téléviseur.

Dans un état d'attente de capture 60, un menu graphique de capture 61 est affiché à l'écran. Le menu graphique de capture 61 comporte une icône de capture 62, par exemple représentant un appareil photo, et éventuellement d'autre icônes. L'écran 4 de la figure 1 monte un exemple du menu graphique de capture 61 affiché en superposition sur un contenu télévisuel en cours de lecture. Alternativement, le menu graphique de capture 61 peut être positionné différemment, par exemple sous la forme d'un bandeau supérieur ou d'un panneau latéral par rapport contenu télévisuel en cours de lecture.

Le menu graphique de capture 61 pourrait être affiché en permanence. De préférence, pour éviter de surcharger l'image, ce menu est affiché de manière contextuelle en réponse à une action 63 de l'utilisateur sur la télécommande 7, par exemple l'appui sur un bouton « action ». Comme visible sur la figure 3, l'état d'attente de capture 60 peut ainsi être atteint en partant d'un état de lecture en temps réel 64 du contenu télévisuel ou en partant d'un état de pause 65 du contenu télévisuel, c'est à dire une image figée.

Selon un mode de réalisation, le menu graphique de capture 61 contient en combinaison avec l'icône de capture 62 d'autres éléments graphiques, représentés symboliquement au chiffre 66, permettant de contrôler la navigation dans le contenu télévisuel en cours de lecture. En effet, la capture d'image à vif au cours de la visualisation d'un programme peut s'avérer difficile dans certaines séquences rapides du programme. L'ergonomie du système est donc améliorée lorsque l'utilisateur peut facilement, après avoir dépassé l'image qu'il souhaitait capturer, revenir en arrière dans le programme pour capturer l'image au cours d'une deuxième visualisation, notamment à vitesse réduite. L'activation de l'icône de capture 62 provoque l'émission du signal de capture 35 et fait passe l'interface graphique dans un état d'attente de partage 67.

Dans l'état d'attente de partage 67, un menu graphique de partage 68 est affiché à l'écran. Le menu graphique de partage 68 comporte une reproduction de l'image effectivement capturée 69, pour permettre à l'utilisateur de vérifier le résultat de son action précédente, et des icônes de services de partage 70, pour permettre à l'utilisateur de sélectionner un service avec lequel il souhaite communiquer l'image capturée, et éventuellement d'autres icônes. Dans un mode de réalisation l'icône de capture 62 est aussi disponible pour permettre de capturer immédiatement une autre image du programme en cours de lecture si le résultat de la première capture n'est pas satisfaisant.

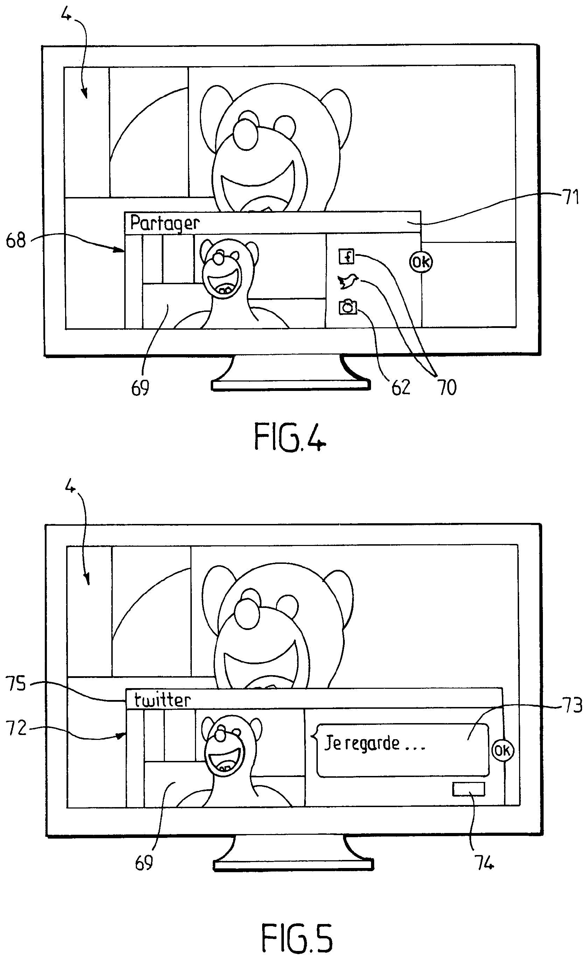

L'écran 4 de la figure 4 montre un exemple du menu graphique de partage 68 affiché en superposition sur le contenu télévisuel en cours de lecture. Ici, deux icônes de services de partage 70 sont prévues pour sélectionner un partage soit sur le réseau social Facebook®, soit sur le réseau social Twitter®. Ces exemples sont purement illustratifs. Un bandeau supérieur 71 du menu graphique de partage 68 peut être prévu pour améliorer la lisibilité de l'interface graphique.

L'activation d'une icône de service de partage 70 entraine la génération d'un projet de message préconfiguré pour être diffusé sur le service de partage sélectionné et fait passer l'interface graphique dans un état d'attente d'envoi 71.

Dans l'état d'attente d'envoi 71, un menu graphique de projet de message 72 est affiché à l'écran. Le menu graphique de projet de message 72 comporte encore la reproduction de l'image capturée 69, qui figure dans le projet de message devant être diffusé, une zone de texte 73 préremplie et/ou à remplir par l'utilisateur à l'aide d'un clavier de la télécommande 7 et/ou d'un clavier affiché à l'écran (non représenté) et une icône d'envoi 74, pour permettre à l'utilisateur d'envoyer finalement le message vers le service de partage choisi.

L'écran 4 de la figure 5 montre un exemple du menu graphique de projet de message 72 affiché en superposition sur le contenu télévisuel en cours de lecture. Un bandeau supérieur 75 du menu graphique de projet de message 72 peut être prévu pour améliorer la lisibilité de l'interface graphique en mentionnant explicitement le service de partage pour lequel le projet de message est configuré.

Selon un mode de réalisation, chaque service de partage sélectionnable est associé à un paramètre de taille de fichier image acceptée, stocké dans une mémoire. Ainsi, le module de conversion 37 ajuste la qualité d'image en fonction du service de partage sélectionné de manière que l'image capturée 69 insérée dans le message ne dépasse pas la taille de fichier image acceptée.

Selon un autre mode de réalisation, l'interface graphique comporte un menu de sélection de taille d'image permettant à l'utilisateur de sélectionner des paramètres de l'image capturée 69 insérée dans le message, par exemple résolution ou la qualité ou la taille de fichier, parmi plusieurs valeurs possibles. Ce menu de sélection peut être affiché par exemple dans l'état d'attente d'envoi 71.

L'activation de l'icône d'envoi 74 entraine la diffusion du message sur le service de partage sélectionné et fait passer l'interface graphique dans un état de confirmation d'envoi 76, dans lequel un bref message de confirmation est affiché à l'écran pour confirmer à l'utilisateur la réussite de l'envoi du message.

Dans les différents menus graphiques représentés, l'activation d'une icône peut être mise en oeuvre de nombreuses manières, comme il est par ailleurs connu dans la technique des interfaces graphiques, par exemple par clic sur l'icône, par pression d'un bouton d'activation de la télécommande 7, par sélection de l'icône suivie d'un clic sur une autre icône d'activation, par exemple une icône marquée « OK », ou autres. Selon un mode de réalisation, la télécommande 7 comporte une touche retour qui permet d'annuler l'opération en cours.

Dans ce qui précède, on a supposé que toutes les données d'utilisateur permettant de configurer l'envoi du message étaient à disposition dans le module de configuration de messagerie 42, à savoir qu'un lien authentifié pouvait être établi par le boîtier d'accès 2 avec le serveur 51 du service de messagerie Twitter® sans que l'utilisateur n'ait besoin de saisir un identifiant ou un mot de passe. Toutefois, une telle pré-configuration n'est pas obligatoire. Dans le cas où l'unité de commande 20 détecte que le module de configuration de messagerie 42 ne contient pas les données permettant d'établir un lien authentifié avec le service de partage sélectionné à l'état 67, un menu graphique de saisie est affiché à l'écran à l'étape 79, pour permettre à l'utilisateur de saisir les données manquantes, par exemple identifiant et/ou un mot de passe. Après saisie de ces données, l'interface graphique atteint l'état d'attente d'envoi 71 précité.

Selon un autre mode de réalisation, le boîtier d'accès 2 est configuré pour transmettre le message à un serveur intermédiaire 45 dans lequel sont stockées les données d'identification susmentionnées, de sorte que le serveur intermédiaire 45 retransmet le message contenant l'image capturée au serveur de partage 50, 51 ou 52 afin que le message soit publié ou diffusé sous l'identité correspondant au compte personnel d'utilisateur. Ce mode de réalisation permet de stocker de manière centralisée les données d'identification permettant d'accéder au compte personnel d'utilisateur, notamment sur un serveur intermédiaire 45 placé sous le contrôle du fournisseur de service qui exploite le serveur de distribution de télévision numérique 3. Dans un mode de réalisation, le fournisseur de service met à la disposition de ses abonnés un portail web permettant de configurer les données d'identification susmentionnées sur le serveur intermédiaire 45. Ainsi, la gestion de ces données d'identification, qui peuvent comporter des données sensibles, peut être effectuée de manière plus sûre.

Dans un mode de réalisation employant le serveur intermédiaire 45, le projet de message téléchargé sur le serveur intermédiaire 45 par le module 10 contient l'image capturée dans le format d'image brute. Un retraitement de l'image capturée peut alors être effectué par le serveur intermédiaire 45 avant la communication du message sur le service de partage sélectionné. Un tel retraitement peut comporter diverses opérations, par exemple une conversion de l'image dans un format compressé pour satisfaire un critère de taille de fichier et/ou l'insertion d'éléments graphiques dans l'image, notamment un bandeau publicitaire.

Des fonctions de capture et de partage d'une séquence vidéo peuvent être conçues de manière similaire aux fonctions de capture et de partage d'image décrites ci-dessus. Pour cela, un organe d'enclenchement d'enregistrement identique ou distinct de l'icône de capture 62 peut être prévu pour marquer le début et/ou la fin de la séquence vidéo à capturer. Cet organe d'enclenchement d'enregistrement peut prendre la forme d'un élément graphique du menu graphique de contrôle ou d'un bouton dédié de la télécommande.

L'activation de l'organe d'enclenchement permet d'enclencher l'enregistrement d'une séquence vidéo en cours de visualisation. L'activation de l'organe d'enclenchement d'enregistrement entraîne l'affichage en superposition de la vidéo en cours de visualisation d'une barre d'enregistrement représentant la durée de l'enregistrement. Une seconde activation de l'organe d'enclenchement d'enregistrement permet de stopper l'enregistrement. Dans le cas d'un organe d'enclenchement sous la forme d'un bouton dédié de la télécommande, l'enclenchement peut être dépendant de la durée d'appui sur ledit bouton dédié.

Dès lors que l'enregistrement est effectué, la séquence enregistrée est affichée à nouveau sur l'écran,en remplacement du programme en cours de visualisation. L'affichage de la séquence enregistré permet un réglage de la durée de la séquence à partager. L'affichage de la séquence enregistrée comporte, par exemple en superposition ou juxtaposition, l'affichage d'une interface graphique de réglage. Cette interface graphique est par exemple constituée d'éléments du menu graphique de contrôle affichés uniquement lors de l'activation d'un enregistrement d'une séquence vidéo. L'interface graphique de réglage comporte des éléments graphiques tels que des boutons destinés à définir un instant de début de séquence à partager et un instant de fin de séquence à partager dans la séquence enregistrée. Ce réglage du début et de la fin de la séquence à partager peut également être réalisé à l'aide de boutons dédiés de la télécommande. Des boutons de la télécommande présentant les symboles « < » et « > » permettent par exemple de déplacer respectivement antérieurement ou postérieurement dans la séquence vidéo enregistrée les point de début et de fin de la séquence à partager.

En plus des éléments de réglages de début et de fin de la séquence à partager, l'interface graphique affichée en superposition de la séquence enregistrée comporte avantageusement un élément de partage tel qu'un bouton pour amorcer un partage de la séquence sur des réseaux sociaux. L'activation de l'élément de partage permet le passage à l'état d'attente de partage 67. Le menu grraphique de partage présente alors, en remplacement de l'image sélectionnée dans le cadre de la capture d'image, la première image de la séquence sélectionnée pour vérification par l'utilisateur de la sélection.

Dans un autre mode de réalisation, la durée d'une séquence enregistrée est fixe. Ainsi, l'activation de l'organe d'enclenchement d'enregistrement permet de déclencher un enregistrement de la vidéo en cours de visualisation pour une durée prédéterminée. L'activation de l'organe d'enclenchement d'enregistrement entraîne avantageusement l'affichage en superposition de la barre d'enregistrement. L'enregistrement est arrété automatiquement après une durée déterminée. La séquence ainsi enregistrée est alors affichée en remplacement du programme en cours de visualisation.

L'affichage de la séquence enregistrée permet de régler le début de la séquence à partager et/ou la fin de la séquence à partager incluse dans la séquence enregistrée. Ce réglage du début de la séquence à partager et/ou de la fin de la séquence à partager dans la séquence enregistrée se fait via une interface graphique superposée, une interface graphique justaposée, des boutons dédiés de la télécommande ou tout autre système de réglage adapté.

Les modes de réalisation décrits ci-dessus portent sur des signaux de télévision comportant préférentiellement une piste audio. Toutefois, des procédés et dispositifs similaires peuvent être employés pour traiter des signaux vidéo sans piste audio.

Dans un mode de réalisation, le boîtier d'accès 2 combine le module de réception et de traitement de signal vidéo 10 avec d'autres fonctionnalités telles que des fonctionnalités d'accès à l'Internet, des fonctionnalités de routage IP, de traduction d'adresses, de pare-feu, des fonctionnalités de gestion de réseau local filaire Ethernet et/ou sans fil Wifi, des fonctionnalités de téléphonie sur IP, des fonctionnalités de stockage et de lecture et écriture de média audio et vidéo selon différents codecs, etc. Cette liste n'est pas limitative.

Selon un mode de réalisation, le boîtier d'accès 2 met en oeuvre un gestionnaire de fichiers permettant de transférer l'image stockée dans le module de mémoire de partage 38 vers d'autres dispositifs de stockage, notamment la mémoire de masse 14 ou la mémoire d'autres appareils connectés au boîtier d'accès 2 via le réseau local filaire ou sans fil, par exemple ordinateurs, téléphones, Smartphones, tablettes numériques, ou autres appareils munis d'un dispositif d'affichage. Selon un mode de réalisation, les fonctionnalités de la télécommande 7 sont remplies par un tel appareil connecté au boîtier d'accès 2, par exemple une tablette numérique.

Dans un mode de réalisation, le boîtier d'accès 2 est capable d'accéder à des contenus vidéo depuis plusieurs sources, par exemple depuis un dispositif de stockage de masse de type centre multimédia et depuis l'interface 11 reliée au serveur de télévision 3. De préférence dans ce cas, le module de réception et de traitement de signal vidéo 10 est agencé de manière à pouvoir être commuté sur ces différentes sources pour mettre en oeuvre à chaque fois des fonctionnalités de capture d'images depuis la source considérée et des fonctionnalités de partage des images capturées. Ainsi, sur la figure 2, le module de réception et de traitement de signal vidéo 10 comporte une interface de réseau local 34, par exemple filaire ou sans fil, permettant de fournir au module décodeur 15 un contenu vidéo à décoder 6 provenant d'un stockage externe, par exemple clé USB ou ordinateur personnel.

Selon des modes de réalisation, le module de réception et de traitement de signal vidéo 10 décrit peut être mis en oeuvre dans des appareils susceptibles de recevoir des flux vidéo autres que le boîtier d'accès 2, par exemple un téléphone mobile, une tablette numérique ou un ordinateur personnel relié à l'Internet. Le module de réception et de traitement de signal vidéo 10 permet à l'utilisateur de publier de manière rapide et réactive des images ou des courtes citations de contenus vidéo, notamment de programmes télévisés diffusés en direct, ainsi que des commentaires associés sur des services de partage tels que des réseaux sociaux, forums de discussion sur la toile ou des messageries.

Certains des éléments représentés, notamment les composants du module de réception et de traitement de signal vidéo, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Procédé de traitement d'un signal vidéo, comportant :
générer une interface graphique comprenant des éléments graphiques de contrôle activables en réponse à des signaux d'activation, les éléments graphiques de contrôle comprenant un élément déclencheur de capture d'image (62) et une pluralité d'éléments déclencheur de partage d'image (70), chaque élément déclencheur de partage d'image étant associé à un service de partage,
produire à destination d'un afficheur (4) un signal d'affichage représentant une combinaison de l'interface graphique et d'un signal vidéo en cours de lecture, les éléments graphiques de contrôle étant affichés en superposition au dessus du signal vidéo en cours de lecture, sélectionner (35) une section du signal vidéo en cours de lecture en réponse à une activation de l'élément déclencheur de capture d'image, la section du signal vidéo sélectionnée comportant une image du signal vidéo (69) affichée sur l'afficheur (4) au moment de l'activation de l'élément déclencheur de capture d'image (62),
mettre à disposition la section de signal vidéo sélectionnée dans une mémoire (36, 38) **caractérisé en ce que** chaque service de partage est associé à un paramètre de taille de fichier image acceptée, et **en ce que** après activation de l'élément déclencheur de capture d'image par l'utilisateur, chaque élément déclencheur de partage d'image est activable par l'utilisateur pour déclencher les étapes de :
ajuster la qualité d'image de la section du signal vidéo en fonction du service de partage de manière que la section du signal vidéo ne dépasse pas la taille de fichier image acceptée par ledit service de partage
générer un projet de message (72) contenant la section du signal vidéo, et
envoyer le message à destination du service de partage (50, 51, 52) correspondant.

2. Procédé selon la revendication 1, dans lequel le projet de message (72) généré comporte en outre une zone de texte (73).

3. Procédé selon la revendication 1 ou 2, comprenant en outre l'étape d'employer une clé de sécurité associée à un compte personnel sécurisé du service de partage pour partager le message sous une identité déterminée associée au compte personnel sécurisé.

4. Procédé selon la revendication 3, dans lequel la clé de sécurité comporte un jeton d'authentification généré conformément à un protocole d'autorisation ouvert OAuth.

5. Procédé selon l'une des revendications 1 à 4, dans lequel la section de signal vidéo sélectionnée est constituée d'une image (69) affichée sur l'afficheur au moment de l'activation de l'élément déclencheur de capture d'image (62).

6. Procédé selon la revendication 5, dans lequel la section de signal vidéo sélectionnée comporte une séquence d'images débutant à une image affichée sur l'afficheur au moment de l'activation de l'élément déclencheur de capture d'image (62).

7. Procédé selon la revendication 6, comportant en outre une étape de modification d'un point de début et/ou d'un point de fin de la section de signal vidéo sélectionnée pour sélectionner une séquence d'images réduite.

8. Procédé selon la revendication 6, dans lequel une séquence audio associée à la séquence d'images est également sélectionnée en réponse à l'activation de l'élément déclencheur de capture d'image et mise à disposition dans une mémoire.

9. Procédé selon l'une des revendications 1 à 8, dans lequel la section de signal vidéo sélectionnée est mise à disposition dans la mémoire (36) dans un format d'image brute.

10. Procédé selon la revendication 9, comportant en outre les étapes de : convertir (37) la section de signal vidéo depuis le format d'image brute dans un format d'image compressé,
mettre à disposition la section de signal vidéo dans le format d'image compressé dans une mémoire (38).

11. Procédé selon l'une des revendications 1 à 10, comportant en outre : recevoir un flux vidéo (12) encodé selon un format compressé,
décoder le flux vidéo pour générer le signal vidéo en cours de lecture (30).

12. Procédé selon l'une des revendications 1 à 11, dans lequel les éléments graphiques de contrôle comportent en outre un élément graphique (66) de contrôle de la navigation dans le contenu télévisuel en cours de lecture, le procédé comportant en outre une étape d'activation de l'élément graphique (66) de contrôle de la navigation dans le contenu télévisuel en cours de lecture par pression d'un bouton d'activation de la télécommande (7), de manière à revenir en arrière dans le signal vidéo en cours de lecture pour permettre à un utilisateur de capturer l'image au cours d'une deuxième visualisation,

13. Dispositif de traitement pour signal vidéo (10), comportant :
une mémoire tampon vidéo (16) apte à stocker un signal vidéo en cours de lecture (30), un module de génération d'interface graphique (20, 21) apte à générer une interface graphique comprenant des éléments graphiques de contrôle activables en réponse à des signaux d'activation pour contrôler des fonctions du dispositif de traitement (10),
un mélangeur vidéo (23) apte à produire un signal d'affichage à destination d'un afficheur, le signal d'affichage représentant une combinaison de l'interface graphique provenant du module de génération (20, 21) et du signal vidéo en cours de lecture (30) provenant de la mémoire tampon vidéo,
dans lequel les éléments graphiques de contrôle comprennent un élément déclencheur de capture d'image (62) et une pluralité d'éléments déclencheur de partage d'image (70), chaque élément déclencheur de partage d'image étant associé à un service de partage, les éléments graphiques de contrôle étant affichable sur l'afficheur en combinaison avec le signal vidéo en cours de lecture, les éléments graphiques de contrôle étant affichables en superposition au dessus du signal vidéo en cours de lecture, et dans lequel l'élément déclencheur de capture d'image est activable pour déclencher les étapes de :
sélectionner (35) une section du signal vidéo en cours de lecture comportant une image (69) affichée sur l'afficheur au moment de l'activation de l'élément déclencheur de capture d'image (62), et
mettre à disposition la section de signal vidéo sélectionnée dans une mémoire (36, 37) du dispositif de traitement
**caractérisé en ce que** chaque service de partage est associé à un paramètre de taille de fichier image acceptée,
le dispositif de traitement comportant en outre un module générateur de message (20, 45) apte à, en réponse à une activation de l'un des éléments déclencheurs de partage d'image postérieurement à une activation de l'élément déclencheur de capture d'image, ajuster la qualité d'image de la section du signal vidéo en fonction dudit service de partage de manière que la section du signal vidéo ne dépasse pas la taille de fichier image acceptée par ledit service de partage, générer un projet de message contenant la section du signal vidéo et une zone de texte (73) et à envoyer le message à destination dudit service de partage (50, 51, 52) correspondant en réponse à un signal de validation.

14. Dispositif de traitement selon la revendication 13, comprenant en outre un module de mémoire de capture (36) et un module de copie mémoire (20) apte à copier la section de signal vidéo sélectionnée depuis la mémoire tampon vidéo vers le module de mémoire de capture en réponse à l'activation de l'élément déclencheur de capture d'image (62).

15. Dispositif de traitement selon l'une des revendications 13 à 14, comportant en outre :
une interface d'entrée (13) apte à recevoir un flux vidéo encodé selon un format compressé (12), et
un module de décodage vidéo (15) apte à décoder le flux vidéo pour générer le signal vidéo en cours de lecture (30).

16. Dispositif de traitement selon la revendication 13, comprenant en outre un module de stockage de profil (42) apte à stocker des données personnelles associées à un compte personnel sécurisé de chaque service de partage, le module générateur de message (20, 45) étant apte à initier une communication avec le service de partage (50, 51, 52) correspondant en employant les données personnelles de manière à partager le message sous une identité déterminée associée au compte personnel sécurisé.

## Patentansprüche

1. Verfahren zur Bearbeitung eines Videosignals umfassend:
Erzeugen einer grafischen Benutzeroberfläche, welche grafische Regelelemente aufweist, welche als Reaktion auf Aktivierungssignale aktiviert werden, wobei die grafischen Regelelemente ein Auslöserelement zur Bilderfassung (62) und eine Vielzahl von Auslöserelementen zum Teilen des Bildes (70) aufweisen, wobei jedes Auslöserelement zum Teilen des Bildes mit einem Sharing-Dienst verbunden ist,
Herstellen eines auf eine Anzeigeeinheit (4) ausgerichteten Anzeigesignals, welches eine Kombination der grafischen Benutzeroberfläche und eines wiedergegebenen Videosignals darstellt, wobei die grafischen Regelelemente das wiedergegebe Videosignal überlagernd angezeigt werden,
Auswählen (35) eines Abschnittes des wiedergegebenen Videosignals als Reaktion auf eine Aktivierung des Auslöserelements zur Bilderfassung, wobei der Abschnitt des ausgewählten Videosignals ein Bild des Videosignals umfasst, welches auf der Anzeigeeinheit zum Zeitpunkt der Aktivierung des Auslöserelements zur Bilderfassung (62) angezeigt wird, Bereitstellen des ausgewählten Videosignalabschnitts in einem Speicher (36, 38),
**dadurch gekennzeichnet, dass** jeder Sharing-Dienst einem akzeptierten Parameter der Bilddateigröße zugeordnet wird, und dadurch, dass nach der Aktivierung des Auslöserelements zur Bilderfassung durch den Benutzer jedes Auslöserelement zur Bilderteilung durch den Benutzer zum Auslösen der folgenden Schritte aktiviert wird:
Anpassen der Bildqualität des Videosignalabschnitts gemäß dem Sharing-Dienst, so dass der Videoabschnitt nicht die durch den Sharing-Dienst akzeptierte Bilddateigröße überschreitet, Erzeugen eines Mitteilungsentwurfs (72), welches den Videosignalabschnitt enthält, und
Senden der Mitteilung zum entsprechenden Sharing-Dienst (50, 51, 52).

2. Verfahren gemäß Anspruch 1, wobei der erzeugte Mitteilungsentwurf (72) weiterhin einen Textbereich (73) enthält.

3. Verfahren gemäß Anspruch 1 oder 2, aufweisend weiterhin einen Anwendungsschritt eines Sicherheitsschlüssels verbunden mit einem persönlichen Sicherheitskonto des Sharing-Diensts, um Mitteilungen unter einer vorgegebenen, mit dem persönlichen Sicherheitskonto verbundenen Identität teilen zu können.

4. Verfahren gemäß Anspruch 3, wobei der Sicherheitsschlüssel einen Sicherheits-Token umfasst, welcher entsprechend einem offenen Autorisierungsprotokoll OAuth erzeugt wird.

5. Verfahren gemäß Anspruch 1 bis 4, wobei der ausgewählte Videosignalabschnitt aus einem auf der Anzeigeeinheit im Zeitpunkt der Aktivierung des Auslöserelements (62) der Bilderfassung angezeigtem Bild (69) besteht.

6. Verfahren gemäß Anspruch 5, wobei der ausgewählte Videosignalabschnitt eine Sequenz von Bildern umfasst, angefangen von einem auf der Anzeigeeinheit im Zeitpunkt der Aktivierung des Auslöserelements zur Bilderfassung angezeigtem Bild.

7. Verfahren gemäß Anspruch 6, umfassend weiterhin einen Veränderungsschritt eines Anfangs- und/oder Endabschnitts des ausgewählten Videosignalabschnitts, um eine verkleinerte Bildsequenz auszuwählen.

8. Verfahren gemäß Anspruch 6, wobei eine Tonsequenz verbunden mit der Bildsequenz ebenfalls als Reaktion auf die Aktivierung des Auslöserelements der Bilderfassung ausgewählt und in einem Speicher zu Verfügung gestellt wird.

9. Verfahren gemäß einem der Ansprüche 1 bis 8, wobei der ausgewählte Videosignalabschnitt in dem Speicher (36) als Rohbildformat zur Verfügung gestellt wird.

10. Verfahren gemäß Anspruch 9, umfassend unter anderem die Schritte:
Umwandeln (37) des Videosignalabschnittes aus dem Rohbildformat in ein komprimiertes Bildformat,
Bereitstellen des Videosignalabschnitts im komprimierten Format in einem Speicher (38).

11. Verfahren gemäß einem der Ansprüche 1 bis 10, umfassend weiterhin:
Erhalten eines kodierten Videostreams (12) in einem komprimierten Format,
Dekodieren des Videostreams, um das wiedergegebene (30) Videosignal zu erzeugen.

12. Verfahren gemäß Anspruch 1 bis 11, wobei die grafischen Regelelemente unter anderem eine grafisches Regelelement (66) der Navigation der wiedergegebenen Fernsehinhalte umfassen, wobei das Verfahren unter anderem einen Aktivierungsschritt des grafischen Regelelements (66) der Navigation der wiedergegebenen Fernsehinhalte durch Drücken eines Knopfes der Fernbedienung (7) umfasst, so dass in dem wiedergegebenen Videosignalabschnitt zurückgespult werden kann, um dem Benutzer die Bilderfassung während einer zweiten Betrachtung zu ermöglichen.

13. Bearbeitungsvorrichtung (10) eines Videosignals umfassend:
einen Videozwischenspeicher (16), welcher dazu geeignet ist, ein Videosignal während der Wiedergabe (30) zu speichern,
ein Modul zur Erzeugung von graphischen Benutzeroberflächen (20, 21), welches dazu geeignet ist, eine grafische Benutzeroberfläche zu erzeugen, welche grafische Regelelemente aufweist, welche in Reaktion auf Aktivierungssignale aktivierbar sind, um die Funktionen der Bearbeitungsvorrichtung (10) zu regeln,
einen Videomischer (23), welcher dazu geeignet ist, ein auf eine Anzeigeeinheit ausgerichtetes Anzeigesignal zu erzeugen, wobei das Anzeigesignal eine Kombination der grafischen Oberfläche, welche vom Modul zur Erzeugung (20, 21) stammt, und des wiedergegebenen (30) Videosignals, welches vom Zwischenspeicher stammt, aufweist,
wobei die grafischen Regelelemente ein Auslöserelement zur Bilderfassung (62) und eine Vielzahl von Auslöserelementen zum Teilen des Bildes (70) aufweisen, wobei jedes Auslöserelement zum Teilen des Bildes (70) mit eine Sharing-Dienst verbunden ist, wobei die grafischen Regelelemente auf der Anzeigeeinheit in Kombination mit dem wiedergegebenen Videosignal anzeigbar sind, wobei die grafischen Regelelemente überlagernd zum wiedergegebenen Videosignal anzeigbar sind, und wobei das Auslöserelement zur Bilderfassung aktivierbar ist, um folgende Schritte auszulösen:
Auswählen (35) eines Abschnittes des wiedergegebenen Videosignals umfassend ein auf der Anzeigeeinheit im Zeitpunkt der Aktivierung des Auslöserelements zur Bilderfassung (62) angezeigtes Bild (69), und
Bereitstellen des ausgewählten Videosignalabschnitts in einem Speicher (36, 37) der Bearbeitungsvorrichtung
**dadurch gekennzeichnet, dass** jeder Sharing-Dienst einem akzeptierten Parameter der Bilddateigröße zuordnenbar ist,
wobei die Bearbeitungsvorrichtung weiterhin ein Modul zur Erzeugung einer Mitteilung (20, 45) umfasst, welches dazu geeignet ist, die Bildqualität des Videosignalabschnitts in Reaktion auf eine, der Aktivierung des Auslöserelements zur Bilderfassung nachfolgende Aktivierung des Auslöserelementes zum Teilen des Bildes entsprechend dem Sharing-Dienst anzupassen, so dass der Videosignalabschnitt nicht die akzeptierte Bilddateigröße durch den Sharing-Dienst überschreitet, und einen Mitteilungsentwurf zu erzeugen, welcher den Videosignalabschnitt und einen Textbereich enthält, und die Mitteilung an den jeweiligen Sharing-Dienst (50, 51, 52) als Reaktion auf ein Freigabesignal zu senden.

14. Bearbeitungsvorrichtung gemäß Anspruch 13, weiterhin aufweisend ein Erfassungsspeichermodul (36) und ein Kopierpeichermodul (20), welches dazu geeignet ist, den ausgewählten Videosignalabschnitt vom Videozwischenspeicher zum Erfassungsspeichermodul als Reaktion zur Aktivierung des Auslöserelements der Bilderfassung (62) zu kopieren.

15. Bearbeitungsvorrichtung gemäß einem der Ansprüche 13 bis 14, umfassend weiterhin:
eine Eingangsschnittstelle (13), welche dazu geeignet ist, einen kodierten Videostream in einem komprimierten Format (12) entgegenzunehmen, und
eine Videodekodiermodul (15), welches dazu geeignet ist, den Videostream zu dekodieren, um das wiedergegebene (30) Videosignal zu erzeugen.

16. Bearbeitungsvorrichtung gemäß Anspruch 13, weiterhin umfassend ein Profilspeichermodul, welches dazu geeignet ist, persönliche Daten, welche mit einem persönlichen Sicherheitskonto des jeweiligen Sharing-Diensts verbunden sind, zu speichern, wobei das Modul zur Erzeugung einer Mitteilung (20, 45) dazu geeignet ist, eine Kommunikation mit dem jeweiligen Sharing-Dienst (50, 51, 52) einzuleiten, in dem es die persönlichen Daten in einer Art verwendet, so dass die Mitteilung unter einer vorgegebenen, mit dem persönlichen Sicherheitskonto verbundenen Identität geteilt ist.

## Claims

1. Method for processing a video signal, comprising:
generating a graphical interface comprising graphic control elements that can be activated in response to activation signals, the graphic control elements comprising an image capture triggering icon (62) and a plurality of image sharing triggering elements (70), each image sharing triggering element being associated to a sharing service,
producing for a display (4) a display signal representing a combination of the graphical interface and of a video signal currently being played back, the graphic control elements being displayed overlaid on the video signal currently being played back, selecting (35) a section of the video signal currently being played back in response to an activation of the image capture triggering icon, the selected section of the video signal comprising an image of the video signal (69) displayed on the display (4) at the time of the activation of the image capture triggering icon (62),
making the selected video signal section available in a memory (36, 38) **characterized in that** each sharing service is associated with an accepted image file size parameter, and **in that** after the activation of the image capture triggering icon by the user, each image sharing triggering element can be activated by the user to trigger the steps of :
adjusting the image quality of the section of the video signal according to the sharing service so as the section of the video signal does not exceed the image file size accepted by said sharing service
generating a draft message (72) containing the section of the video signal, and
sending the message to the corresponding sharing service (50, 51, 52).

2. Method according to Claim 1, in which the draft message (72) generated also comprises a text area (73).

3. Method according to Claim 1 or 2, also comprising the step of employing a security key associated with a secure personal account of the sharing service to share the message under a determined identity associated with the secure personal account.

4. Method according to Claim 3, in which the security key comprises an authentication token generated in accordance with an open authorization protocol OAuth.

5. Method according one of claims 1 to 4, in which the selected video signal section consists of an image (69) displayed on the display at the time of the activation of the image capture triggering icon (62).

6. Method according to Claim 5, in which the selected video signal section comprises a sequence of images beginning at an image displayed on the display at the time of the activation of the image capture triggering icon (62).

7. Method according to Claim 6, further comprising the step of modifying a starting point and/or an end point of the selected section of the video signal to select a reduced sequence of images.

8. Method according to Claim 6, in which an audio sequence associated with the sequence of images is also selected in response to the activation of the image capture triggering icon and made available in a memory.

9. Method according to one of claim 1 to 8, in which the selected video signal section is made available in the memory (36) in a raw image format.

10. Method according to Claim 9, also comprising the steps of:
converting (37) the video signal section from the raw image format into a compressed image format,
making the video signal section available in the compressed image format in a memory (38).

11. Method according to one of claim 1 to 10, also comprising:
receiving a video stream (12) encoded in a compressed format,
decoding the video stream to generate the video signal currently being played back (30).

12. Method according to one of claims 1 to 11, in which graphic control elements further comprise a graphic element (66) to control the navigation in the televisual content currently being played back, the method further comprising a step of triggering the graphical element (66) to control the navigation in the televisual content currently being played back by pressing a trigger button on a remote control (7) in order to rewind in the video signal currently being played back to allow a user to capture the image during a second viewing.

13. Processing device for video signal (10), comprising:
a video buffer memory (16) capable of storing a video signal currently being played back (30),
a graphical interface generation module (20, 21) capable of generating a graphical interface comprising graphic control elements that can be activated in response to activation signals to control functions of the processing device (10),
a video mixer (23) capable of producing a display signal for a display, the display signal representing a combination of the graphical interface originating from the generation module (20, 21) and of the video signal currently being played back (30) originating from the video buffer memory,
in which the graphic control elements comprise an image capture triggering icon (62) and a plurality of image sharing triggering elements (70), each image sharing triggering element being associated to a sharing service, the graphic control elements being displayable on the display in combination with the video signal currently being played back, the graphic control elements being displayable overlaid on the video signal currently being played back, and wherein the image capture triggering icon can be activated to trigger the steps of:
selecting (35) a section of the video signal currently being played back comprising an image (69) displayed on the display at the time of the activation of the image capture triggering icon (62), and
making the selected video signal section available in a memory (36, 37) of the processing device
**characterized in that** each sharing service is associated with an accepted image file size parameter,
the processing device further comprising a message generating module (20, 45) capable of, in response to an activation of one of the image sharing triggering elements after an activation of the image capture triggering icon, adjusting the image quality of the section of the video signal according to said sharing service so as the section of the video signal does not exceed the image file size accepted by said sharing service, generating a draft message containing the section of the video signal and a text area (73) and sending the message to the corresponding sharing service (50, 51, 52) in response to a validation signal.

14. Processing device according to Claim 13, also comprising a capture memory module (36) and a memory copy module (20) capable of copying the selected video signal section from the video buffer memory to the capture memory module in response to the activation of the image capture triggering icon (62).

15. Processing device according to one of claims 13 to 14, also comprising:
an input interface (13) capable of receiving a video stream encoded in a compressed format (12), and
a video decoding module (15) capable of decoding the video stream to generate the video signal currently being played back (30).

16. Processing device according to Claim 13, also comprising a profile storage module (42) capable of storing personal data associated with a secure personal account of each sharing service, the message generating module (20, 45) being capable of initiating a communication with the corresponding sharing service (50, 51, 52) by employing the personal data in such a way as to share the message under a determined identity associated with the secure personal account.
